# DEMANDE DE BREVET EUROPEEN

(11) **EP 0 693 417 A1**
(43) Date de publication de la demande: **24.01.1996**
(21) Numéro de dépôt: 95111150.9
(22) Date de dépôt: 17.07.1995
(51) Int. Cl.: B62K 21/14

(54) **Dispositif d'amortissement pour guidons de bicyclettes, motocyclettes et analogues**

(30) Priorité: 21.07.1994 IT VI940116
(71) Demandeur: De Bei, Claudio, I-36061 Bassano del Grappa (Vicenza) (IT)
(72) Inventeur: De Bei, Claudio, I-36061 Bassano del Grappa (Vicenza) (IT)
(74) Mandataire: Bettello, Pietro, Dott. Ing.

(57) **Abrégé**

Le dispositif comprend un manchon (3) destiné à être placé autour de la portion centrale du guidon (1). Ce manchon est solidaire de la partie transversale (4') d'une structure en "U" (4) qui présente deux bras (4'') dont les extrémités sont fixées à celles (5) d'un élément à symétrie cylindrique (6) placé à l'intérieur d'un élément cylindrique creux (16). Entre ces deux éléments est interposé un moyen élastique faisant obstacle à la rotation réciproque de ceux-ci autour de leur axe commun longitudinal. L'élément (16) est placé dans un logement cylindrique (8) solidaire de la potence (2) de la direction.

## Description

La présente invention a pour objet un dispositif apte à assurer l'amortissement des guidons de bicyclettes, motocyclettes et analogues.

On sait que l'utilisation des bicyclettes sur des terrains accidentés et disjoints est très malcommode du fait qu'en général le guidon est dépourvu de tout système d' amortissement et que toutes les vibrations de ce guidon doivent donc être amorties directement par les bras du cycliste.

Le problème est particulièrement accentué lorsqu'on utilise des bicyclettes du type dit "moutain bike" sur des sentiers hors route, bien que ceci puisse aussi se constater également sur des routes asphaltées du fait de la présence de trous ou autres défectuosités de surface.

On a certes proposé des dispositifs aptes à permettre l'amortissement de la roue avant de la bicyclette ; à titre d'exemple, on cite les fourches télescopiques, les systèmes à parallélogramme, les dispositifs présentant des pistons et analogues. Tous ces dispositifs, bien qu'étant généralement efficaces, présentent cependant une notable complexité de construction et, surtout, doivent en fait être montés directement par le constructeur, en ce sens qu'il est pratiquement impossible de modifier une bicyclette préexistante dépourvue desdits systèmes d' amortissement pour lui faire comporter un tel dispositifs.

Le but de la présente invention est de prévoir un dispositif apte à assurer l'amortissement des guidons de bicyclettes et analogues, qui soit structurellement très simple et qui, en particulier, se prête à être monté même sur des bicyclettes déjà existantes, sans problème particulier.

L'invention a pour objet le dispositif d'amortissement qui est défini à la revendication 1 et aux revendications dépendantes.

En fait l'invention consiste principalement à faire comporter au dispositif un manchon propre à embrasser la partie centrale du guidon, ledit manchon étant solidaire de la portion transversale d'une structure en U présentant deux bras dont les extrémités sont fixées à celles d'un élément à symétrie cylindrique placé à l'intérieur d'un élément cylindrique creux. Entre ces deux éléments est interposé un moyen élastique faisant obstacle à leur rotation réciproque autour de leur axe longitudinal commun. L'élément cylindrique creux est lui-même placé dans un logement cylindrique solidaire de la partie supérieure de la colonne du guidon.

Ce dispositif, outre le fait qu'il est particulièrement simple, peut être monté sur une bicyclette déjà existante ; en outre, en utilisant une forme particulière de réalisation il est possible de régler l'inclinaison du guidon de manière extrêmement simple.

Ces caractéristiques de l'invention et d'autres seront maintenant décrites ci-après en détail en faisant référence au dessin annexé dans lequel :
La fig. 1 est une vue frontale d'ensemble du dispositif selon l'invention.

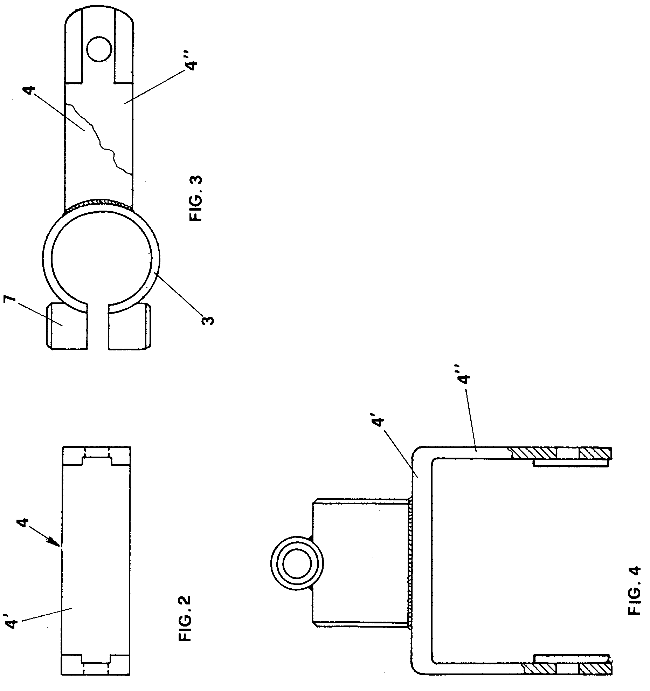

Les fig. 2, 3 et 4 sont trois vues fondamentales de la structure en U prévu dans ce dispositif.
Les fig. 5 à 10 représentent des détails d'une première forme particulière de réalisation du dispositif selon l'invention.
Les fig. 11 et 12 sont une vue frontale et une vue de côté des moyens élastiques de retenue prévus dans cette première forme de réalisation.
Les fig. 13 et 14 sont respectivement une vue par l'avant partiellement en coupe et une vue de côté des moyens élastiques de retenue prévus dans une deuxième forme de réalisation.

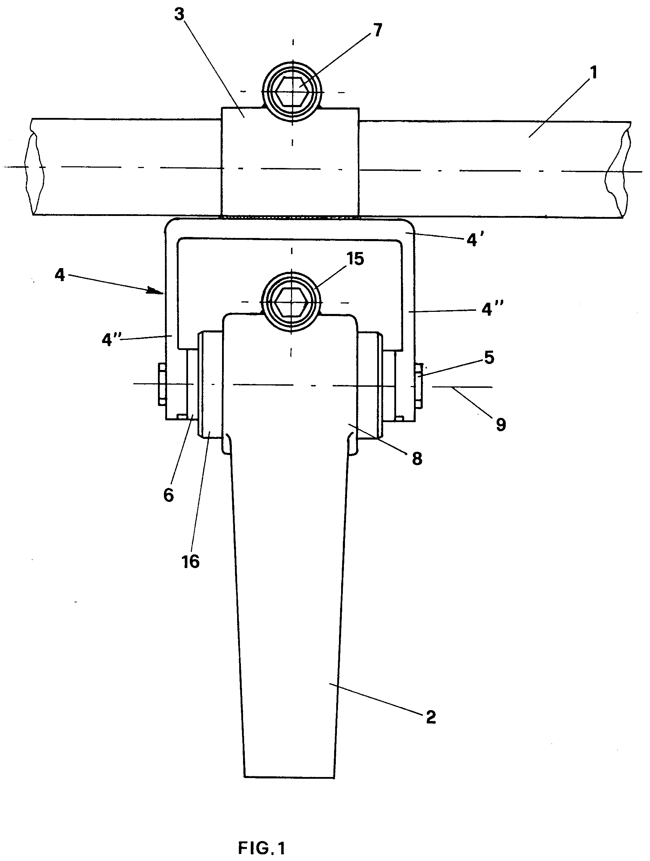

Sur la fig. 1, on voit que le dispositif selon l'invention est destiné à être monté au niveau de la partie centrale du guidon 1 d'une bicyclette, d'un cyclomoteur ou équivalent, généralement appelée "pli".

Cette partie centrale est entourée par un manchon 3 solidaire vers le bas, la partie centrale 4' d'une structure en U 4, qui présente deux bras 4'' dont les extrémités sont solidaires d'un élément à symétrie cylindrique 6 placé à son tour à l'intérieur d'un élément cylindrique creux 16.

Ce dernier est lui-même placé dans un logement cylindrique 8 prévu au sommet de la potence 2 de la direction sous-jacente, non représentée sur le dessin pour simplifier.

Entre l'élément 6 et l'élément 16 est interposé un moyen élastique faisant obstacle à la rotation réciproque de ces éléments autour de leur axe longitudinal commun 9.

On conçoit donc sans peine que toute vibration transmise par la potence 2 au guidon 1 est en fait amortie grâce à la présence de l'élément élastique précité qui permet alors un débattement et une rotation limités du guidon, suffisants de toute façon pour amortir les vibrations transmises aux bras de l'utilisateur lors de la conduite du véhicule.

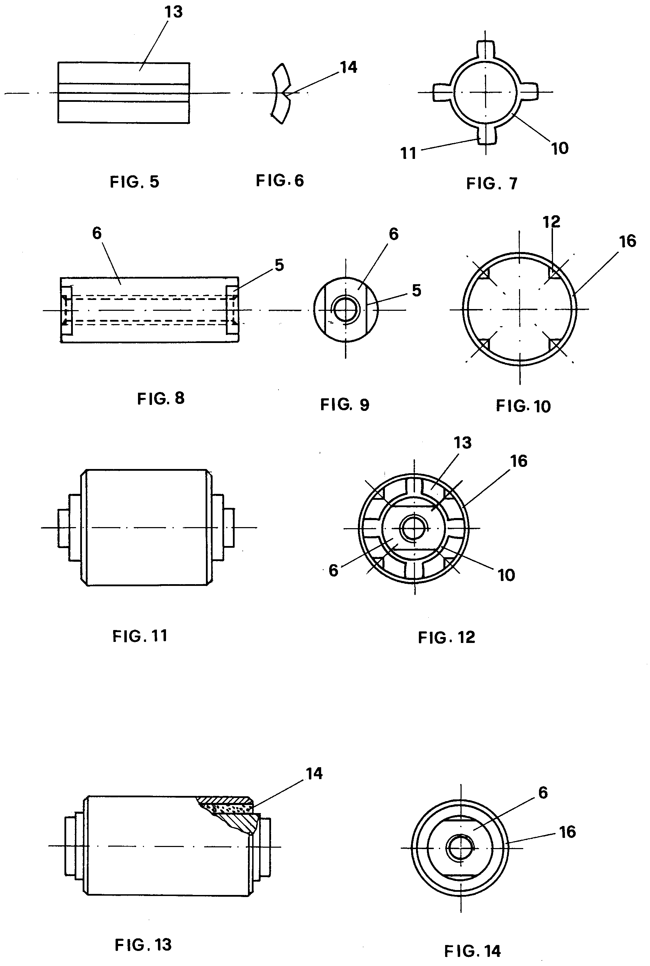

Sur les fig. 5 à 12, on voit que l'invention, dans une première forme particulière de réalisation, prévoit qu'autour de l'élément à symétrie cylindrique 6 (fig. 7 et 9), est agencée une couronne 10 qui présente plusieurs rayons 11. Au droit de la surface intérieure de l'élément cylindrique creux 16 est prévue une série de saillies 12, en nombre égal à celui des rayons 11.

Comme il est bien visible en particulier sur la figure 12, dans les espaces intermédiaires compris entre la couronne 10 et l'élément 16, sont interposées des plaquettes incurvées 13, réalisées en une matière élastique et prévues en nombre égal à celui des rayons 11 et des saillies 12. Afin de fixer les plaquettes 13 de façon stable par rapport à l'élément 16, celles-ci présentent une encoche 14 de forme exactement correspondante à celle des saillies 12, afin de permettre le logement de celles-ci dans lesdites cavités.

Les extrémités 5 de l'élément 6 à symétrie cylindrique sont conformées de façon à s'insérer parfaitement sans jeu dans les extrémités spécialement conformées des bras 4'' de l'élément 4 en forme de U, de façon qu'entre ces deux éléments, il n'y ait aucune possibilité de rotation et/ou de déplacement réciproque, pourvu, naturellement, que soit présent un moyen de fixation réciproque approprié.

Sur ce point, il est évident que chaque fois que se produit une transmission de vibrations de la potence 2 au guidon 1, ce dernier a la possibilité de décrire une rotation limitée autour de l'axe 9, mais qu'il est amorti par la présence des plaquettes élastiques 13 dont l'action est efficace surtout par le fait qu'elles sont liées rigidement à l'élément creux 6, au moins au droit de leur portion intermédiaire, tandis que leurs parties extérieures subissent une action de déformation à cause des rayons 11 de la couronne 10, qui sont substantiellement solidaires de l'élément 6.

Selon une autre forme de réalisation plus simplifiée du dispositif selon l'invention, on prévoit qu'entre l'élément 6 et l'élément creux 16 est placée simplement une couronne cylindrique 14 réalisée en une matière élastique ; également dans ce cas, les extrémités de l'élément 6 sont conformées de manière à rester solidement solidaires des extrémités des bras 4'' de l'élément 4.

Comme on le voit en particulier sur la fig. 1, aussi bien le manchon 3 que le logement cylindrique 8 sont avantageusement conformés en forme de mâchoires (voir en particulier la fig. 3 en ce qui concerne le manchon 3), les extrémités des deux bras de cette mâchoire présentant chacune un logement 7 et 15, dans lesquels peut être agence un moyen de liaison mobile, par exemple une vis, par action sur laquelle on peut avantageusement assurer le rapprochement des deux bras de manière à bloquer lmesdits éléments respectivement sur le pli du guidon 1 et sur l'élément cylindrique creux 6.

Ayant donc la possibilité de modifier la position angulaire du guidon 1 et de l'élément cylindrique 16 par rapport au manchon 3 et au logement 8 respectivement, on comprend que l'utilisateur peut très aisément modifier l'inclinaison du guidon par rapport à la potence 2.

On comprend, d'après ce qui précède, que le dispositif, outre le fait qu'il est particulièrement simple et efficace, est en outre apte à être monté sur des bicyclettes pré-existantes par une personne qui n'est pas particulièrement experte, contrairement aux dispositifs connus.

## Revendications

1. Dispositif d'amortissement pour guidons de bicyclettes, motocyclettes et analogues, caractérisé en ce qu'il comprend un manchon (3) apte à entourer la partie centrale du guidon (1), ce manchon étant solidaire de la partie transversale (4') d'une structure en U qui présente deux bras (4'') dont les extrémités sont fixeés à celles (5) d'un élément (6) à symétrique cylindrique, placé dans un élément cylindrique creux (16), un moyen élastique faisant obstacle à la rotation réciproque des deux éléments autour de leur axe commun longitudinal (9) étant interposé et l'élément cylindrique creux (16) étant à son tour placé dans un logement cylindrique (8) placé solidairement au droit du sommet de la potence (2) de la direction.

2. Dispositif selon la revendication 1, caractérisé en ce que les extrémités (5) de l'élément cylindrique (6) sont conformées de manière à se placer sans jeu dans des logements correspondants ménagés au droit des extrémités des bras (4'') de l'élément (4) en forme de U, de manière à rester de façon stable solidaires desdites extrémités une fois qu'a été agencé un moyen de fixation réciproque entre ces deux éléments.

3. Dispositif selon la revendication 2, caractérisé en ce que sur l'élément cylindrique (6) est placée une couronne (10) munie d'une série de rayons (11), ladite couronne étant montée à l'intérieur de l'élément cylindrique creux (16) qui présente, au droit de sa surface interne, une série de saillies (12) en nombre égal à celui des rayons, tandis que dans les intervalles entre les rayons est placée une série de plaquettes courbes (13) dont chacune présente une cavité (14) dans laquelle vient se loger l'une des saillies (12).

4. Dispositif selon la revendication 2, caractérisé en ce qu'entre l'élément (6) et l'élément cylindrique creux (16) est interposée une couronne annulaire (14) réalisée en une matière élastique.

5. Dispositif selon la revendication 1, caractérisé en ce que le manchon (3) comme le logement cylindrique (8) sont réalisés au moyen de deux bras opposés dont les extrémités peuvent être mises en contact réciproque, en déterminant la solidarisation desdits éléments respectivement avec le guidon (8) et avec l'élément cylindrique creux (16) à l'aide de moyens de liaison mobiles insérés dans des logements (7, 15) prévus au droit des extrémités desdits bras.
